(19) Europäisches Patentamt
European Patent Office
Office européen des brevets

(11) **EP 2 634 525 A1**

(12) **EUROPEAN PATENT APPLICATION**

(43) Date of publication:
**04.09.2013 Bulletin 2013/36**

(51) Int Cl.:
**G01B 9/02** (2006.01)

(21) Application number: **13000665.3**

(22) Date of filing: **08.02.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.02.2012 JP 2012044302**

(71) Applicant: **Canon Kabushiki Kaisha Tokyo (JP)**

(72) Inventor: **Sasaki, Takamasa Tokyo (JP)**

(74) Representative: **Weser, Wolfgang Weser & Kollegen Patentanwälte Radeckestrasse 43 81245 München (DE)**

(54) **Absolute distance measuring multiwavelength interferometer**

(57) The present invention provides a measurement apparatus including a phase detection unit configured to detect, from interfering light of light reflected by a reference surface and light reflected by a test surface, a phase corresponding to an optical path length between the reference surface and the test surface, a refractive index detection unit configured to detect a refractive index of a space between the reference surface and the test surface, and a processing unit configured to obtain the distance from a first phase and a first refractive index detected when the wavelength of light from the light source is a first wavelength, a second phase and a second refractive index detected when the wavelength of light from the light source is a second wavelength, and a third phase at a synthetic wavelength of the first wavelength and the second wavelength.

FIG. 1

**Description**

BACKGROUND OF THE INVENTION

Field of the Invention

The present invention relates to a measurement apparatus which measures the distance between a reference surface and a test surface, and a method of manufacturing an article.

Description of the Related Art

As measurement apparatuses for measuring the distance (absolute distance) between a reference surface and a test surface, synthetic wavelength scanning light wave interferometers are disclosed in Japanese Patent Laid-Open No. 2011-179934 and "High-accuracy absolute distance measurement using frequency comb referenced multi-wavelength source, Applied Optics - APPL OPT, vol. 47, no. 14, 2008". The synthetic wavelength scanning light wave interferometer obtains the absolute distance between a reference surface and a test surface by connecting a length measurement result at a synthetic wavelength generated from two different wavelengths, and a length measurement result at a light source wavelength. The measurement range for the absolute distance between a reference surface and a test surface can be expanded by temporarily scanning the light source wavelength to change the magnitude of the synthetic wavelength.
To accurately connect a length measurement result at a synthetic wavelength and a length measurement result at a light source wavelength in the synthetic wavelength scanning light wave interferometer, the synthetic wavelength needs to be stabilized at high precision. In the air, the synthetic wavelength depends on the refractive index of the air. Thus, if the synthetic wavelength becomes unstable owing to temporal variations of the refractive index of the air, this may cause an absolute distance measurement error. Stabilizing the refractive index of the air requires a chamber and an apparatus for controlling the environment. However, it is practically difficult to arrange the chamber and apparatus over a long distance (that is, between a reference surface and a test surface).

SUMMARY OF THE INVENTION

The present invention provides a technique advantageous for measurement of the absolute distance between a reference surface and a test surface.
The present invention in its first aspect provides a measurement apparatus as specified in claims 1 to 4.
The present invention in its second aspect provides a method of manufacturing an article as specified in claim 5.
Further aspects of the present invention will become apparent from the following description of exemplary embodiments with reference to the attached drawings.

BRIEF DESCRIPTION OF THE DRAWINGS

Fig. 1 is a schematic view showing the arrangement of a measurement apparatus in the first embodiment of the present invention.
Fig. 2 is a chart showing the relationship between the spectrum of light from an optical frequency comb generator and that of light from each of first and second light sources.
Fig. 3 is a timing chart showing a temporal change of the wavelength of light from each of the first and second light sources.
Fig. 4 is a flowchart for explaining measurement processing (processing of obtaining the absolute distance between a reference surface and a test surface) by the measurement apparatus shown in Fig. 1.
Fig. 5 is a schematic view showing the arrangement of a measurement apparatus in the second embodiment of the present invention.
Fig. 6 is a schematic view showing the arrangement of a measurement apparatus in the third embodiment of the present invention.

DESCRIPTION OF THE EMBODIMENTS

Preferred embodiments of the present invention will be described below with reference to the accompanying drawings. Note that the same reference numerals denote the same members throughout the drawings, and a repetitive description thereof will not be given.

<First Embodiment>

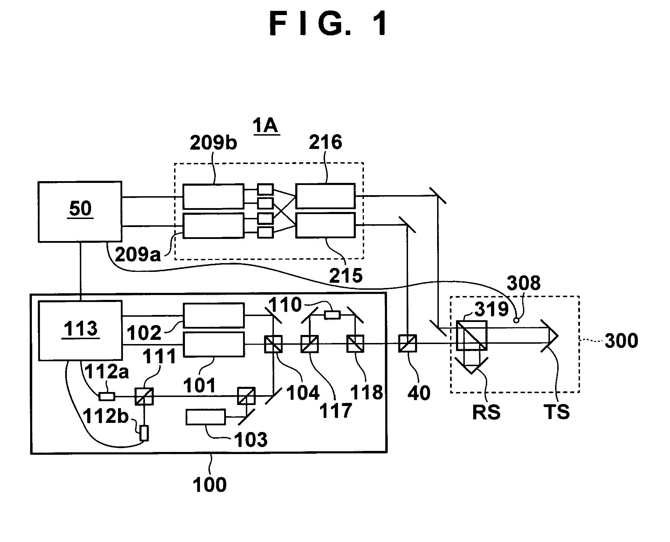

Fig. 1 is a schematic view showing the arrangement of a measurement apparatus 1A in the first embodiment of the present invention. The measurement apparatus 1A is a light wave interference measurement apparatus which measures the distance (absolute distance) between a reference surface and a test surface. As shown in Fig. 1, the measurement apparatus 1A includes a light source unit 100, phase detection unit 200, interference measurement unit 300, beam splitter 40, and processing unit 50.

The light source unit 100 includes a light source capable of changing the wavelength of light, and in the embodiment, includes a first light source 101 and second light source 102. The light source unit 100 also includes an optical frequency comb generator 103, a beam splitter 104, a wavelength shifter 110, a spectral element 111, light quantity detectors 112a and 112b, a light source controller 113, a beam splitter 117, and a polarizing beam splitter 118. The phase detection unit 200 detects, from interfering light of light reflected by a reference surface RS and light reflected by a test surface TS, a phase corresponding to the optical path length between the reference surface RS and the test surface TS. In the embodiment, the phase detection unit 200 includes phase detectors 209a and 209b, and spectral elements 215 and 216. The interference measurement unit 300 includes an environment detector 308 and polarizing beam splitter 319.

The measurement apparatus 1A reduces the wavelength change amount (wavelength scanning amount) of light from the first light source 101 by determining an interference order by using the synthetic wavelength of the wavelength of light from the first light source 101 and that of light from the second light source 102. The wavelength change amount necessary for the first light source 101 can be satisfactorily implemented by modulating a current input to the first light source 101. Since a wavelength response to current modulation is quick, the measurement apparatus 1A can achieve high-speed absolute length measurement.

Light from the first light source 101 enters the beam splitter 104 and is split. Also, light from the second light source 102 enters the beam splitter 104 and is split, and its beam axis becomes coaxial with that of light from the first light source 101.

The first light source 101 is a wavelength-tunable light source capable of tuning the wavelength of light, and the second light source 102 is a fixed-wavelength light source in which the wavelength of light is fixed. The first light source 101 and second light source 102 are formed from semiconductor lasers such as DFB (Distributed Feed-Back) lasers or DBR (Distributed Bragg Reflector) lasers, and emit beams having a plurality of wavelengths different from each other. In the embodiment, the first light source 101 and second light source 102 are formed from separate light sources. However, the first light source 101 and second light source 102 may be formed from one light source, for example, a multi-wavelength light source (light source having a structure in which a plurality of semiconductor lasers are integrated in one element) used in optical communication.

One light split by the beam splitter 104 (light reflected by the beam splitter 104) is superimposed on light from the optical frequency comb generator 103. The light enters the spectral element 111, and is separated into light from the first light source 101 and light from the second light source 102. The light quantity detector 112a detects the quantity of light from the first light source 101, and the light quantity detector 112b detects the quantity of light from the second light source 102.

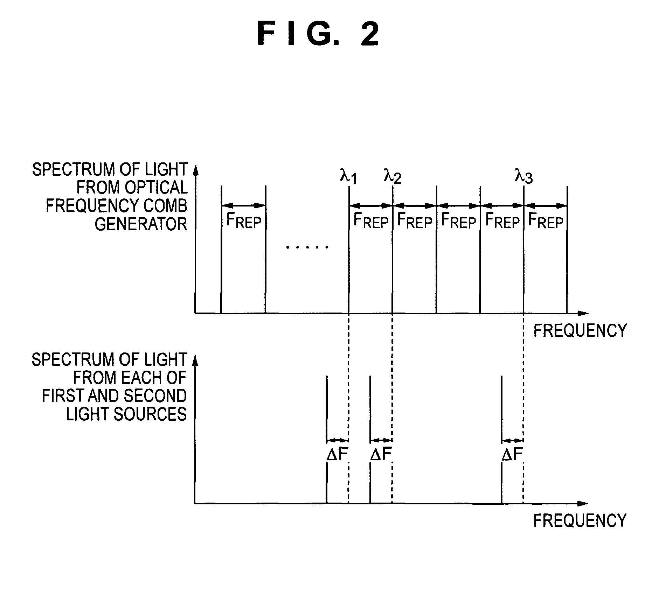

Fig. 2 is a chart showing the relationship between the spectrum of light from the optical frequency comb generator 103 and that of light from each of the first light source 101 and second light source 102. The optical frequency comb generator 103 generates light having a plurality of frequency components at uniform frequency differences. In the embodiment, light from the optical frequency comb generator 103 has a periodic comb tooth-shaped spectrum at uniform frequency intervals (frequency differences) $F_{REP}$, as shown in Fig. 2. In light from the optical frequency comb generator 103, the frequency of the Nth spectrum counted from frequency 0 [Hz] is represented by the frequency interval $F_{REP}$ and a remainder frequency $F_{CEO}$. $F_{REP}$ and $F_{CEO}$ fall within the microwave frequency band. Thus, by stabilizing $F_{REP}$ and $F_{CEO}$ to a reference signal of microwaves, the frequency of light from the optical frequency comb generator 103 is stabilized at high precision.

The light source controller 113 stabilizes the wavelength of light from the first light source 101 to a wavelength corresponding to the spectrum of light from the optical frequency comb generator 103 by using the detection result (the quantity of light from the first light source 101) of the light quantity detector 112a. Similarly, the light source controller 113 stabilizes the wavelength of light from the second light source 102 to a wavelength corresponding to the spectrum of light from the optical frequency comb generator 103 by using the detection result (the quantity of light from the second light source 102) of the light quantity detector 112b.

Stabilization of the wavelength of light emitted by each of the first light source 101 and second light source 102 by the light source controller 113 will be explained with reference to Fig. 2. In the embodiment, the light source controller 113 stabilizes the wavelength of light emitted by the first light source 101 to a first wavelength $\lambda_1$ or second wavelength $\lambda_2$ corresponding to each of two different spectra of light generated by the optical frequency comb generator 103. Also, the light source controller 113 stabilizes the wavelength of light emitted by the second light source 102 to a third wavelength

$\lambda_3$ corresponding to one spectrum of light generated by the optical frequency comb generator 103. More specifically, the light source controller 113 adjusts the wavelength of light emitted by the first light source 101 or second light source 102 so that the difference between the spectrum of light from the optical frequency comb generator 103 and a beat signal frequency corresponding to the first light source 101 or second light source 102 takes a predetermined value $\Delta F$. By modulating a current input to the first light source 101 or second light source 102, the wavelength of light emitted by the first light source 101 or second light source 102 can be adjusted.

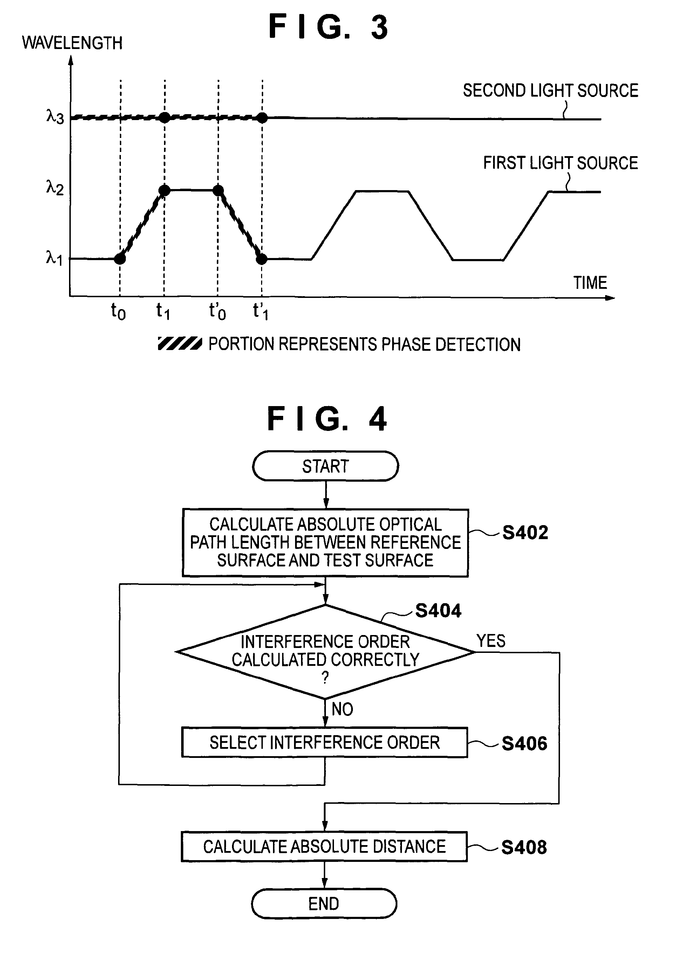

In the embodiment, the wavelength of light from the first light source 101 is stabilized to the first wavelength $\lambda_1$, then continuously changed (scanned) from the first wavelength $\lambda_1$ to the second wavelength $\lambda_2$, and stabilized to the second wavelength $\lambda_2$. The wavelength of light from the first light source 101 is also continuously changed from the second wavelength $\lambda_2$ to the first wavelength $\lambda_1$. In this manner, the wavelength of light from the first light source 101 is stabilized to at least two wavelengths (first wavelength $\lambda_1$ and second wavelength $\lambda_2$), and periodically changed between these two wavelengths quickly. In the embodiment, the light source controller 113 controls the wavelength of light emitted by each of the first light source 101 and second light source 102, as shown in Fig. 3. Fig. 3 is a timing chart showing a temporal change of the wavelength of light from each of the first light source 101 and second light source 102.

As described above, the optical frequency comb generator 103 is used as a wavelength reference element for stabilizing (setting) the wavelength of light emitted by each of the first light source 101 and second light source 102. Compared to a gas cell used as a wavelength reference element, the optical frequency comb generator 103 can stabilize, at high precision, the wavelength of light emitted by each of the first light source 101 and second light source 102. However, a gas cell may be used as a wavelength reference element as long as it can stabilize the wavelength at necessary precision (that is, the wavelength may be stabilized to the absorption line of gas).

Referring back to Fig. 1, the other light split by the beam splitter 104 (light having passed through the beam splitter 104) enters the beam splitter 117 and is further split. Of the light beams split by the beam splitter 117, light which passes through the beam splitter 117 and directly enters the polarizing beam splitter 118 will be called the first light, and light which is reflected by the beam splitter 117 and enters the wavelength shifter 110 will be called the second light.

The wavelength shifter 110 includes an acoustooptical element and $\lambda/2$ plate. The wavelength shifter 110 applies a predetermined amount of frequency shift $d\nu$ to the incident wavelength of light from each of the first light source 101 and second light source 102. In addition, the wavelength shifter 110 rotates the polarized light by 90°, and emits the polarized light orthogonal to incident polarized light. The light from the wavelength shifter 110 enters the polarizing beam splitter 118.

The first light and second light pass through a common optical path via the polarizing beam splitter 118, enter the beam splitter 40, and are branched into two light beams. One light branched by the beam splitter 40 enters the spectral element 215. The spectral element 215 separates the light from the first light source 101 and the light from the second light source 102 that have coaxially entered the spectral element 215. The spectral element 215 is formed from, for example, a spectral filter, array waveguide diffraction grating, prism, or bulk diffraction grating in accordance with a necessary wavelength resolution and cost.

The phase detector 209a detects, via the spectral element 215, interfering light corresponding to light from the first light source 101, for example, interfering light of the first light and second light having the wavelength $\lambda_1$, and outputs an interference signal. In the embodiment, the phase detector 209a outputs (detects), as the interference signal, a beat signal corresponding to the frequency difference between the first light and second light having the wavelength $\lambda_1$. The phase detector 209b detects, via the spectral element 215, interfering light corresponding to light from the second light source 102, for example, interfering light of the first light and second light having the wavelength $\lambda_3$, and outputs an interference signal. In the embodiment, the phase detector 209b outputs (detects), as the interference signal, a beat signal corresponding to the frequency difference between the first light and second light having the wavelength $\lambda_3$. The phase detectors 209a and 209b include polarizers, and extract common polarized light components of the first light and second light, thereby obtaining interference signals. Interference signals detected by the phase detectors 209a and 209b via the spectral element 215 will be referred to as reference signals.

The other light branched by the beam splitter 40 enters the interference measurement unit 300. In the interference measurement unit 300, the polarizing beam splitter 319 is configured to transmit the first light and reflect the second light. The second light reflected by the polarizing beam splitter 319 is reflected by the reference surface RS, passes through the polarizing beam splitter 319, and enters the spectral element 216. The first light having passed through the polarizing beam splitter 319 is reflected by the test surface TS, reflected by the polarizing beam splitter 319, and enters the spectral element 216. The polarizing beam splitter 319 is an optical element capable of splitting light reflected by each of the reference surface RS and test surface TS into polarized light components. In this way, the polarizing beam splitter 319 functions as a light splitting element which splits light from each of the first light source 101 and second light source 102 into two light beams, and causes one light beam to hit the reference surface RS and the other light beam to hit the test surface TS. Light reflected by the reference surface RS will be called reference light, and light reflected by the test surface TS will be called test light.

The phase detector 209a detects, via the spectral element 215, interfering light of reference light and test light

having the wavelength $\lambda_1$, and outputs an interference signal. The phase detector 209b detects, via the spectral element 215, interfering light of reference light and test light having the wavelength $\lambda_3$, and outputs an interference signal. Interference signals detected by the phase detectors 209a and 209b via the spectral element 216 will be called measurement signals. Similar to the reference signal, the measurement signal is a beat signal corresponding to the frequency difference between the first light and the second light. However, the phase of the interference signal differs from that of the reference signal owing to the optical path length difference between reference light and test light.

The environment detector 308 is arranged near the test surface TS to detect an environment near the test surface TS. The environment detector 308 includes, for example, a temperature sensor and air pressure sensor. In the embodiment, the environment detector 308 functions as a refractive index detector which detects the refractive index (air refractive index) of a space (that is, air) between the reference surface RS and the test surface TS. The temperature sensitivity and air pressure sensitivity of the air refractive index are 1 ppm/C° and 0.3 ppm/hPa, respectively. Hence, even if the environment detector 308 is formed from a relatively low-cost temperature sensor and air pressure sensor, a refractive index of about 0.1 ppm can be easily guaranteed.

The processing unit 50 performs processing of obtaining the absolute distance between the reference surface RS and the test surface TS by using the detection result of the phase detection unit 200 and the detection result of the environment detector 308. Also, the processing unit 50 controls the wavelength of light emitted by the first light source 101 (and the second light source 102) via the light source controller 113.

The measurement apparatus 1A according to the embodiment has an arrangement capable of easily coping with arranging a plurality of interferometers for one light source unit. More specifically, in the measurement apparatus 1A, light is split (branched) between the beam splitter 104 and the beam splitter 117. This allows arranging a plurality of interferometers for one light source unit. By adding a small frequency shift difference between two polarized light components orthogonal to each other, the measurement apparatus 1A can constitute heterodyne detection between the reference surface RS and the test surface TS, and implement high-precision phase measurement.

Measurement processing (that is, processing of obtaining the absolute distance between the reference surface RS and the test surface TS by the processing unit 50) by the measurement apparatus 1A will be explained with reference to Fig. 4.

In step S402, the absolute optical path length between the reference surface RS and the test surface TS is calculated based on phases detected by the phase detectors 209a and 209b. In the embodiment, light from the second light source 102 has the wavelength $\lambda_3$, and light from the first light source 101 is changed (scanned) from $\lambda_1$ to $\lambda_2$. The absolute optical path length is calculated by connecting a length measurement result at the wavelength $\lambda_3$, a length measurement result at the synthetic wavelength of the wavelengths $\lambda_3$ and $\lambda_1$, and a length measurement result obtained from a phase change at the synthetic wavelength when the wavelength $\lambda_1$ is continuously changed to the wavelength $\lambda_2$. A phase (first phase) $\phi_3$ and phase (second phase) $\phi_1$ corresponding to interference signals for the wavelength (first wavelength) $\lambda_3$ and wavelength (second wavelength) $\lambda_1$ are given by equations (1) and (2):

$$\phi_3 = 4\pi n_3 L / \lambda_3 \quad \cdots \quad (1)$$

$$\phi_1 = 4\pi n_1 L / \lambda_1 \quad \cdots \quad (2)$$

where $n_3$ is the refractive index (first refractive index) of the air at the wavelength $\lambda_3$, $n_1$ is the refractive index (second refractive index) of the air at the wavelength $\lambda_1$, and L is the geometrical distance between the reference surface RS and the test surface TS.

A difference (phase difference) $\Phi$ between the phases $\phi_3$ and $\phi_1$ represents a phase (third phase) at a synthetic wavelength $\Lambda_C$ of the wavelengths $\lambda_3$ and $\lambda_1$. The phase $\Phi$ at the synthetic wavelength $\Lambda_C$, and the synthetic wavelength $\Lambda_C$ are given by equations (3) and (4), respectively:

$$\Phi = \frac{4\pi n_3}{\lambda_3} L - \frac{4\pi n_1}{\lambda_1} L = \frac{4\pi n_3}{\Lambda_C} L \quad \cdots \quad (3)$$

$$\Lambda_C = \frac{c}{\Delta v + [(n_3 - n_1)/n_3]v_1} \quad \cdots \quad (4)$$

where $\Delta v$ is the frequency difference between the wavelengths $\lambda_3$ and $\lambda_1$, $v_1$ is the frequency of the wavelength $\lambda_1$, and c is the velocity of light.

When the wavelength of light from the first light source 101 is continuously changed from the wavelength $\lambda_1$ to the wavelength $\lambda_2$, that is, the frequency is changed at a frequency interval $\delta v$, a change $\Delta\Phi$ of the phase $\Phi$ at the synthetic wavelength $\Lambda_C$ is given by equation (5):

$$\Delta\Phi = \frac{4\pi n_3}{c} \cdot \delta v \cdot L \quad \cdots \quad (5)$$

As for the change $\Delta\Phi$ of the phase $\Phi$ at the synthetic wavelength $\Lambda_C$, the phase is always detected by the phase detectors 209a and 209b while changing the wavelength, discontinuous connections between phases of 0 and $2\pi$ are counted, and thus an absolute phase free from ambiguity of $2\pi$ can be detected.

An optical path length $OPL_3$ at the wavelength $\lambda_3$ is given by equation (6) using the change $\Delta\Phi$ of the phase $\Phi$ at the synthetic wavelength $\Lambda_C$:

$$OPL_3 = n_3 L = \frac{c}{4\pi\delta v}\Delta\Phi \quad \cdots \quad (6)$$

The optical path length $OPL_3$ at the wavelength $\lambda_3$ is given by equation (7) using the synthetic wavelength $\Lambda_C$ and the phase $\Phi$ at the synthetic wavelength $\Lambda_C$:

$$OPL_3 = \left( N_\Lambda + \frac{\Phi}{2\pi} \right)\frac{\Lambda_C}{2} \quad \cdots \quad (7)$$

where $N_\Lambda$ is the interference order representing the indefiniteness of an integral multiple of the phase $\Phi$ at the synthetic wavelength $\Lambda_C$. $N_\Lambda$ is given by equation (8):

$$N_\Lambda = Round\left\{ \frac{OPL_3}{\Lambda_C / 2} - \frac{\Phi}{2\pi} \right\} \quad \cdots \quad (8)$$

where Round{} is a function of rounding a numeral in {} to an integer.

Similarly, the optical path length $OPL_3$ at the wavelength $\lambda_3$ is given by equation (9) using the wavelength $\lambda_3$ and the phase $\phi_3$:

$$OPL_3 = \left( N_\lambda + \frac{\phi_3}{2\pi} \right)\frac{\lambda_3}{2} \quad \cdots \quad (9)$$

where $N_\lambda$ is the interference order representing the indefiniteness of an integral multiple of the phase $\phi_3$ at the wavelength $\lambda_3$. $N_\lambda$ is given by equation (10):

$$N_\lambda = Round\left\{ \frac{OPL_3}{\lambda_3 / 2} - \frac{\phi_3}{2\pi} \right\} \quad \cdots \quad (10)$$

In this fashion, the absolute value (absolute optical path length) of the optical path length $OPL_3$ at the wavelength $\lambda_3$ is calculated by connecting a length measurement result at the wavelength $\lambda_3$, a length measurement result at the synthetic wavelength of the wavelengths $\lambda_3$ and $\lambda_1$, and a length measurement result obtained from a phase change at the synthetic wavelength. An optical path length $OPL_1$ at the wavelength $\lambda_1$ is also calculated in the same way.

In step S404, it is determined whether the interference orders have been calculated correctly in step S402. As is apparent from equations (4) and (8), the synthetic wavelength $\Lambda_C$ depends on the refractive indices $n_1$ and $n_3$. Thus, if (the values of) the refractive indices $n_1$ and $n_3$ have not been obtained at high precision, an error occurs in the interference orders calculated in step S402, and no absolute distance can be obtained correctly. The precision of a refractive index calculated from the Edlen's formula is about $1 \times 10^{-8}$. For example, when the wavelengths $\lambda_3$ and $\lambda_1$ are 1,209 nm and 1,170 nm, respectively, if the length measurement distance becomes 2 m or more, no interference order can be calculated correctly. In the embodiment, to determine whether the interference orders have been calculated correctly, a refractive index ratio $(n_3 - n_1)/n_3$ represented by equation (11) is calculated from the optical path lengths $OPL_3$ and $OPL_1$ calculated in step S402:

$$\frac{n_3 - n_1}{n_3} = \frac{OPL_3 - OPL_1}{OPL_3} \cong \frac{n_3 - n_1}{n_3} \left\{ 1 + \frac{n_3 \lambda_3 \delta N_{\lambda 3} - n_1 \lambda_1 \delta N_{\lambda 1}}{OPL_3 - OPL_1} \right\} \cdots (11)$$

where $\delta N_{\lambda 3}$ and $\delta N_{\lambda 1}$ are the errors of the interference orders at the wavelengths $\lambda_3$ and $\lambda_1$, respectively. In equation (11), the second term in {} is the error (refractive index ratio error) of the refractive index ratio $(n_3 - n_1)/n_3$ arising from the errors of the interference orders. The refractive index ratio error becomes minimum when $\delta N_{\lambda 3} = \delta N_{\lambda 1} = \pm 1$. For example, when the geometrical distance L is 2 m, and the wavelengths $\lambda_3$ and $\lambda_1$ are 1,209 nm and 1,170 nm, respectively, the refractive index ratio error becomes about $\pm 0.73$. At this time, the refractive index ratio $(n_3 - n_1)/n_3$ is known from the Edlen's formula. Hence, a refractive index ratio obtained from the ratio of optical path lengths calculated in step S402 is compared with the refractive index ratio known from the Edlen's formula. If the difference is equal to or larger than $\pm 0.73$, it is determined that the interference orders have not been calculated correctly, and the process shifts to step S406. On the other hand, a refractive index ratio obtained from the ratio of optical path lengths calculated in step S402 is compared with the refractive index ratio known from the Edlen's formula. If the difference is smaller than $\pm 0.73$, it is determined that the interference orders have been calculated correctly, and the process shifts to step S408.

In step S406, (a combination $(N_{\lambda 3}, N_{\lambda 1})$ of) interference orders predicted to be correct are selected based on the refractive index ratio errors calculated in step S404. Since the refractive indices $n_3$ and $n_1$, the optical path lengths $OPL_3$ and $OPL_1$, and the wavelengths $\lambda_3$ and $\lambda_1$ are known, combination candidates of the interference order errors $\delta N_{\lambda 3}$ and $\delta N_{\lambda 1}$ can be extracted. Combination candidates of interference orders predicted to be correct are extracted from the interference orders calculated in step S404, and one combination of interference orders is selected from these candidates. After that, the process returns to step S404. Steps S404 and S406 are repeated until a combination of correct interference orders is obtained. In other words, the interference orders $N_{\lambda 3}$ and $N_{\lambda 1}$ are determined so that the error $\delta N_{\lambda 3}$ of the interference order (first interference order) $N_{\lambda 3}$ and the error $\delta N_{\lambda 1}$ of the interference order (second interference order) $N_{\lambda 1}$ fall within the allowance range.

In step S408, the absolute distance (that is, the geometrical distance L) between the reference surface RS and the test surface TS is calculated using correct interference orders determined through steps S402 to S406. More specifically, the absolute distance between the reference surface RS and the test surface TS is calculated by dividing the optical path length (for example, the optical path length $OPL_3$ or $OPL_1$) calculated in step S402 by the refractive index (refractive index $n_1$ or $n_2$) obtained from the detection result of the environment detector 308 and the Edlen's formula.

When the distance between the reference surface RS and the test surface TS is long, light may be interrupted during measurement processing. In this case, the synthetic wavelength in the air is corrected using correct interference orders obtained upon completion of the first measurement processing. Thereafter, the synthetic wavelength in the air is appropriately corrected using a measured optical path length. Accordingly, when light is interrupted during measurement processing, repetition of steps S404 and S406 can be skipped.

As described above, according to the first embodiment, even when the distance between the reference surface RS and the test surface TS is long, correct interference orders can be obtained, and the absolute distance between the reference surface RS and the test surface TS can be obtained at high precision.

<Second Embodiment>

In the first embodiment, the absolute distance (geometrical distance) between the reference surface RS and the test surface TS is calculated using the detection result of the environment detector 308 and the refractive index obtained from the Edlen's formula. However, when spatial variations (distribution) of the refractive index of the space between the reference surface RS and the test surface TS occur, the influence cannot be corrected. In the second embodiment, therefore, spatial variations of the refractive index of the space between the reference surface RS and the test surface TS are corrected using a two-color method, and the absolute distance between the reference surface RS and the test surface TS is obtained at high precision.

First, a geometrical distance measurement principle by the two-color method will be explained. Letting L be the geometrical distance between the reference surface RS and the test surface TS, OPL($\lambda$) be the optical path length between the reference surface RS and the test surface TS, and n be the refractive index of the air, they satisfy a relation given by equation (12):

$$L = \frac{OPL(\lambda)}{n} \quad \cdots \quad (12)$$

The refractive index n of the air depends on the wavelength $\lambda$ of the light source, the temperature T, the air pressure P, the water vapor pressure $P_w$, and the carbon dioxide concentration x. If these values are known, the refractive index n of the air can be calculated from the Edlen's formula. When length measurement is performed at two wavelengths $\lambda_1$ and $\lambda_4$ different from each other, a relation given by equation (13) is satisfied:

$$L = \frac{OPL(\lambda_1)}{n(\lambda_1, T, P, P_w, x)} = \frac{OPL(\lambda_4)}{n(\lambda_4, T, P, P_w, x)} \quad \cdots \quad (13)$$

Referring to equation (13), the geometrical distance L can be obtained from equations (14) and (15) based on (the length measurement values of) optical path lengths at the two different wavelengths $\lambda_1$ and $\lambda_4$:

$$L = OPL(\lambda_4) - A \cdot \{OPL(\lambda_4) - OPL(\lambda_1)\} \quad \cdots \quad (14)$$

$$A = \frac{n(\lambda_4, T, P, P_w, x) - 1}{n(\lambda_4, T, P, P_w, x) - n(\lambda_1, T, P, P_w, x)} \quad \cdots \quad (15)$$

In a dry environment where the humidity is 0%, the coefficient A is a function of only the two wavelengths $\lambda_1$ and $\lambda_4$. Thus, the geometrical distance L given by equation (14) does not depend on the state of the space (air) between the reference surface RS and the test surface TS. In other words, the geometrical distance L between the reference surface RS and the test surface TS can be calculated from equation (14) without correcting fluctuations of the environment, that is, spatial variations of the refractive index.

To the contrary, when the environment is not a dry environment where the humidity is 0%, the dependence of the coefficient A on the humidity is obtained in advance, and the coefficient A can be calculated from a humidity detected by the humidity sensor. As described above, the coefficient A depends on the two wavelengths $\lambda_1$ and $\lambda_4$, and when the interval (wavelength difference) between the wavelengths $\lambda_1$ and $\lambda_4$ is small, the coefficient A becomes large. A larger coefficient A leads to a larger optical path length measurement error, decreasing the precision (calculation precision) of the geometrical distance. Therefore, to decrease the coefficient A, the two wavelengths need to be set so that the interval between them becomes sufficiently large.

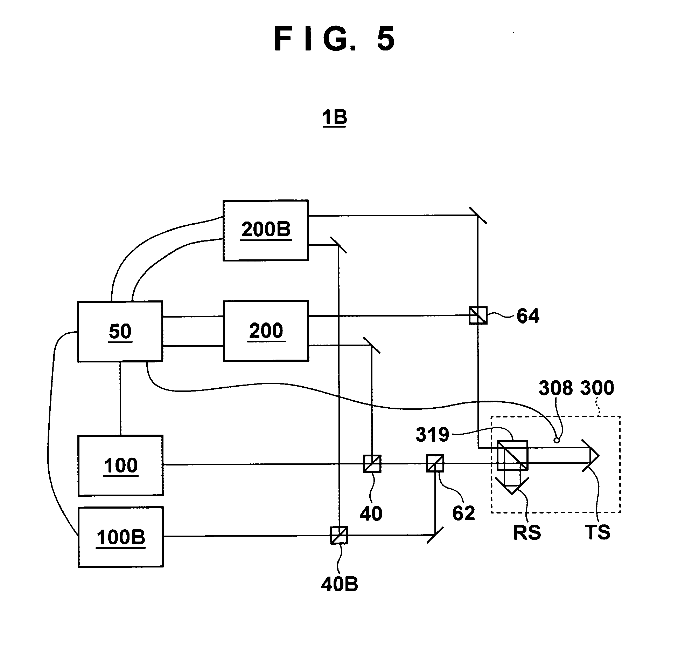

Fig. 5 is a view showing the arrangement of a measurement apparatus 1B in the second embodiment of the present invention. Similar to the measurement apparatus 1A, the measurement apparatus 1B is a light wave interference measurement apparatus which measures the distance (absolute distance) between a reference surface and a test surface. A difference of the arrangement of the measurement apparatus 1B from the measurement apparatus 1A will be described.

To apply the two-color method, the measurement apparatus 1B includes a light source unit 100B, a phase detection unit 200B, a beam splitter 40B, and spectral elements 62 and 64, in addition to the arrangement of the measurement apparatus 1A. In other words, the measurement apparatus 1B has the arrangement of a variation detection unit which detects spatial variations of the refractive index of the space between the reference surface RS and the test surface TS.

The beam splitter 40B branches light from the light source unit 100B into two light beams, and causes one light beam to enter the phase detection unit 200B and the other light beam to enter the spectral element 62. The spectral element 62 is an optical element for causing light from the light source unit 100 and light from the light source unit 100B to enter an interference measurement unit 300 with their optical axes being made coaxial. The spectral element 64 is an optical element for separating light emitted by the interference measurement unit 300 into light from the light source unit 100 and light from the light source unit 100B.

The phase detection unit 200B detects a phase at the wavelength of light from the light source unit 100B. The light source unit 100B and phase detection unit 200B have the same arrangements as those of the light source unit 100 and phase detection unit 200 in the first embodiment, and a detailed description thereof will not be repeated. In the second embodiment, the light source units 100 and 100B are formed from separate light source units. However, instead of the light source unit 100B, light emitted by the light source unit 100 may be split to cause part of the light to enter a nonlinear optical element, thereby generating harmonic light.

As described above, according to the second embodiment, even when spatial variations of the refractive index of the space between the reference surface RS and the test surface TS occur, an error arising from the variations can be corrected, and the absolute distance between the reference surface RS and the test surface TS can be obtained at high precision.

<Third Embodiment>

In the second embodiment, when a humidity distribution is generated on the measurement optical axis, its influence cannot be corrected, so the absolute distance between a reference surface and a test surface cannot be obtained at high precision. To solve this, the third embodiment implements a measurement apparatus capable of obtaining the absolute' distance between a reference surface and a test surface at high precision even when a humidity distribution is generated on the measurement optical axis. In the third embodiment, the two-color method, which was applicable to only a dry environment, is expanded even to a humid environment by measuring a water vapor pressure on the measurement optical axis using water vapor absorption measurement.

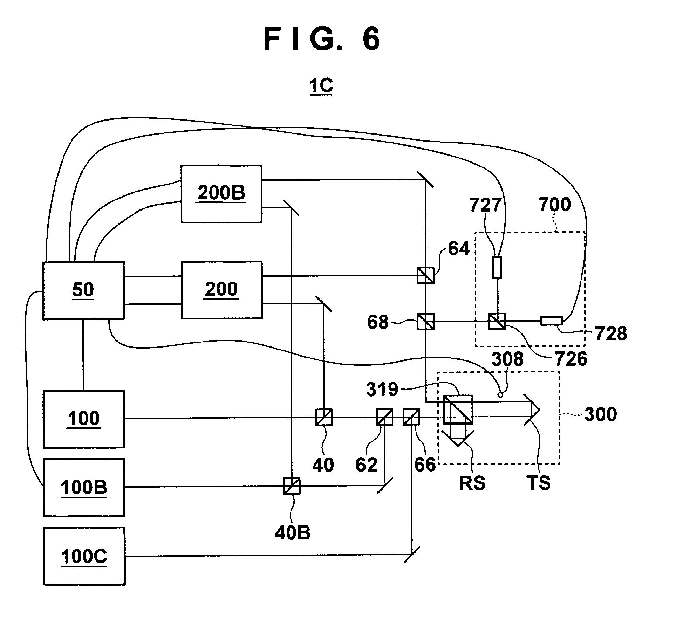

Fig. 6 is a view showing the arrangement of a measurement apparatus 1C in the third embodiment of the present invention. Similar to the measurement apparatuses 1A and 1B, the measurement apparatus 1C is a light wave interference measurement apparatus which measures the distance (absolute distance) between a reference surface and a test surface. A difference of the arrangement of the measurement apparatus 1C from the measurement apparatuses 1A and 1B will be described.

The measurement apparatus 1C includes a partial pressure measurement light source unit 100C and an absorption measurement unit 700, for measuring a water vapor pressure, and spectral elements 66 and 68, in addition to the arrangement of the measurement apparatus 1B.

To measure absorption of a water vapor pressure, the partial pressure measurement light source unit 100C emits light of a wavelength coincident with the absorption line of water vapor. For example, when the absorption line of a near-infrared wavelength near 1.5 $\mu$m is selected as the absorption line of water vapor, the partial pressure measurement light source unit 100C can be formed from a low-cost light source having a narrow-band spectrum, such as DFB-LD. Although measurement of a water vapor pressure will be explained below, the same measurement is possible for a gas for which a partial pressure can be measured using absorption.

Light emitted by the partial pressure measurement light source unit 100C is combined by the spectral element 66 with light emitted by each of light source units 100 and 100B. The light combined by the spectral element 66 enters an interference measurement unit 300, and is split into two light beams by a polarizing beam splitter 319. The light reflected by the polarizing beam splitter 319 enters the reference surface RS. The light reflected by the reference surface RS enters the polarizing beam splitter 319 and is reflected again by it. The light having passed through the polarizing beam splitter 319 enters the test surface TS. The light reflected by the test surface TS enters the polarizing beam splitter 319 and passes again through it. Of light from the partial pressure measurement light source unit 100C, light reflected by the test surface TS will be called water vapor pressure reference light, and light reflected by the test surface TS will be called water vapor pressure test light.

The spectral element 68 separates the water vapor pressure reference light and water vapor pressure test light into light from the light source unit 100 and light from the light source unit 100B, which enter the absorption measurement unit 700. A polarizing beam splitter 726 branches the light entering the absorption measurement unit 700 into water vapor pressure reference light and water vapor pressure test light. The water vapor pressure reference light is reflected by the polarizing beam splitter 726, and its light quantity is detected by a light quantity detector 727. The water vapor pressure test light passes through the polarizing beam splitter 726, and its light quantity is detected by a light quantity detector 728. A processing unit 50 receives the quantity of water vapor pressure reference light detected by the light quantity detector 727 and that of water vapor pressure test light detected by the light quantity detector 728, and calculates an average water vapor pressure on the measurement optical axis.

Measurement processing (that is, processing of obtaining the absolute distance between the reference surface RS and the test surface TS by the processing unit 50) by the measurement apparatus 1C will be explained. In the embodiment, the average water vapor pressure on the optical path of test light is calculated based on the detection results of the light quantity detectors 727 and 728. Then, the absolute distance (geometrical distance) between the reference surface RS and the test surface TS is calculated based on the average water vapor pressure and the measurement results of optical path lengths at two wavelengths.

Let S be the absorption intensity of the water vapor pressure absorption line, $P_w$ be the water vapor pressure (average water vapor pressure), $\Psi(\lambda)$ be the spectrum shape function of the water vapor absorption line, and L be the geometrical distance of the optical path difference between water vapor pressure test light and water vapor pressure reference light. Then, the absorbance $A(\lambda)$ of water vapor on an optical path through which test light passes is given by equation (16):

$$A(\lambda) = P_w \cdot S \cdot \psi(\lambda) \cdot L \quad \cdots \quad (16)$$

Equation (16) assumes that the absorption intensity S and spectrum shape function $\psi(\lambda)$ are known from a database such as HITRAN, and calculated in advance in accordance with the wavelength of light from the partial pressure measurement light source unit 100C.

Letting $I_{ref}$ be the quantity of water vapor pressure reference light detected by the light quantity detector 727, and $I_{test}$ be the quantity of water vapor pressure test light detected by the light quantity detector 728, the relationship between the absorbance $A(\lambda)$ and the light quantities $I_{ref}$ and Itest is given by equation (17):

$$A(\lambda) = -\ln(I_{test}/I_{ref}) \quad \cdots \quad (17)$$

Therefore, the water vapor pressure can be calculated according to equation (18):

$$P_w = -\frac{\ln(I_{test}/I_{ref})}{S \cdot \psi(\lambda) \cdot L} \quad \cdots \quad (18)$$

In equation (18), calculating the water vapor pressure $P_w$ requires information of the geometrical distance L of the optical path difference between water vapor pressure test light and water vapor pressure reference light. However, the optical path length $OPL(\lambda_1)$ or $OPL(\lambda_4)$ can be used as the information.

Next, the calculation principle of the absolute distance (geometrical distance) between the reference surface RS and the test surface TS by the two-color method in a humid environment will be explained. The refractive index n of the air in the presence of water vapor is given by equation (19):

$$n(\lambda, P, T, x, Pw) = 1 + K(\lambda) \cdot D(P, T, x) + g(\lambda) \cdot P_w \quad \cdots \quad (19)$$

In equation (19), when the air density term D(P, T, x) is removed from the optical path lengths $OPL(\lambda_1)$ and $OPL(\lambda_4)$ corresponding to the wavelengths $\lambda_1$ and $\lambda_4$, the geometrical distance L is given by equation (20):

$$L = \frac{K(\lambda_4)\left\{OPL(\lambda_1) - \frac{K(\lambda_1)}{K(\lambda_4)}OPL(\lambda_4)\right\}}{K(\lambda_4) - K(\lambda_1) + P_w(g(\lambda_4)K(\lambda_1) - g(\lambda_1)K(\lambda_4))} \quad \cdots \quad (20)$$

As described above, according to the third embodiment, an error arising from spatial variations of the refractive index of the space between the reference surface RS and the test surface TS can be corrected in the two-color method expanded to a humid environment where water vapor exists on the measurement optical axis. The measurement apparatus 1C can therefore obtain the absolute distance between the reference surface RS and the test surface TS at high precision.

The measurement apparatus according to each of the above-described embodiments is applicable to the manufacture of an article such as a mechanical component. The method of manufacturing an article includes a step of measuring a test surface using the above-described measurement apparatus, and a step of processing (for example, polishing) the test surface to have a predetermined shape based on the measurement result in the preceding step. The method of manufacturing an article is superior to a conventional method in at least one of the performance, quality, productivity, and production cost of an article.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1.   A measurement apparatus which measures a distance between a reference surface and a test surface, comprising:

a light source configured to be able to change a wavelength of light to be emitted;
a light splitting element configured to split light from the light source into two light beams, and cause the one light beam to enter the reference surface and the other light beam to enter the test surface;
a phase detection unit configured to detect, from interfering light of light reflected by the reference surface and light reflected by the test surface, a phase corresponding to an optical path length between the reference surface and the test surface;
a refractive index detection unit configured to detect a refractive index of a space between the reference surface and the test surface; and
a processing unit configured to obtain the distance from a first phase and a first refractive index detected by the phase detection unit and the refractive index detection unit, respectively, when the wavelength of light from the light source is a first wavelength, a second phase and a second refractive index detected by the phase detection unit and the refractive index detection unit, respectively, when the wavelength of light from the light source is a second wavelength, and a third phase at a synthetic wavelength of the first wavelength and the second wavelength,
wherein the processing unit determines a first interference order and a second interference order based on a refractive index ratio of the first refractive index and the second refractive index, and a change of the third phase when the wavelength of light from the light source is continuously changed from the first wavelength to the second wavelength, to make an error of the first interference order of the first phase and an error of the second interference order of the second phase fall within an allowance range, and the processing unit obtains the distance by using at least one of the first interference order and the second interference order.

2.   The apparatus according to claim 1, further comprising a wavelength reference element configured to set the wavelength of light from the light source to one of the first wavelength and the second wavelength.

3.   The apparatus according to claim 2, wherein the wavelength reference element includes an optical frequency comb generator configured to generate light having a plurality of frequency components at uniform frequency differences.

4.   The apparatus according to any one of claims 1 to 3, further comprising a variation detection unit configured to detect a spatial variation of the refractive index of the space between the reference surface and the test surface, wherein the processing unit obtains the distance by correcting, based on the spatial variation of the refractive index detected by the variation detection unit, an error arising from the spatial variation of the refractive index contained in the phase detected by the phase detection unit.

5.   A method of manufacturing an article, comprising the step of processing a test surface of the article by using a result of measuring the test surface by a measurement apparatus according to any one of claims 1 to 4.

# F I G. 1

# F I G. 2

SPECTRUM OF LIGHT
FROM OPTICAL
FREQUENCY COMB
GENERATOR

$\lambda_1$   $\lambda_2$          $\lambda_3$

$F_{REP}$  . . . . .  $F_{REP}$ $F_{REP}$ $F_{REP}$ $F_{REP}$ $F_{REP}$

FREQUENCY

SPECTRUM OF LIGHT
FROM EACH OF
FIRST AND SECOND
LIGHT SOURCES

$\Delta F$   $\Delta F$          $\Delta F$

FREQUENCY

# F I G. 3

WAVELENGTH

SECOND LIGHT SOURCE

FIRST LIGHT SOURCE

$\lambda_3$

$\lambda_2$

$\lambda_1$

TIME

$t_0$　　$t_1$　　$t'_0$　　$t'_1$

///// PORTION REPRESENTS PHASE DETECTION

# F I G. 4

START

CALCULATE ABSOLUTE OPTICAL
PATH LENGTH BETWEEN REFERENCE
SURFACE AND TEST SURFACE — S402

INTERFERENCE ORDER
CALCULATED CORRECTLY
? — S404   YES

NO

SELECT INTERFERENCE ORDER — S406

CALCULATE ABSOLUTE DISTANCE — S408

END

# F I G. 5

1B

# F I G. 6

<u>1C</u>

Europäisches
Patentamt

European
Patent Office

Office européen
des brevets

**EUROPEAN SEARCH REPORT**

Application Number

EP 13 00 0665

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/102805 A1 (KURAMOTO YOSHIYUKI [JP]) 5 May 2011 (2011-05-05) | 1,2,4,5 | INV.<br>G01B9/02 |
| Y | * the whole document * | 3 | |
| Y,D | "High- accuracy absolute distance measurement using frequency comb referenced multiwavelength source", APPLIED OPTICS - APPL OPT, vol. 47, no. 14, 2008, XP002557438, * the whole document * | 3 | |

TECHNICAL FIELDS
SEARCHED      (IPC)

G01B

The present search report has been drawn up for all claims

| Place of search | Date of completion of the search | Examiner |
|---|---|---|
| Munich | 13 June 2013 | Stanciu, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 00 0665

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2013

| Patent document cited in search report | Publication date | Patent family member(s) | Publication date |
|---|---|---|---|
| US 2011102805    A1 | 05-05-2011 | JP    2011099756 A<br>US    2011102805 A1 | 19-05-2011<br>05-05-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011179934 A

**Non-patent literature cited in the description**

- High-accuracy absolute distance measurement using frequency comb referenced multiwavelength source. *Applied Optics - APPL OPT,* 2008, vol. 47 (14